# EUROPÄISCHE PATENTSCHRIFT

(11) **EP 2 718 372 B1**
(45) Veröffentlichungstag und Bekanntmachung des Hinweises auf die Patenterteilung: **13.05.2015**
(21) Anmeldenummer: 12726094.1
(22) Anmeldetag: 04.06.2012
(51) Int. Cl.: C08L 83/04, C08K 5/5399

(54) **SILICONLÖSER**
SILICONE SOLVENT
SOLVANT DE SILICONE

(30) Priorität: 06.06.2011 DE 102011077004
(43) Veröffentlichungstag der Anmeldung: 16.04.2014
(73) Patentinhaber: Wacker Chemie AG, 81737 München (DE)
(72) Erfinder: KÖLLNBERGER, Andreas, 84375 Kirchdorf (DE)
(74) Vertreter: Mieskes, Klaus Theoderich
(86) Internationale Anmeldenummer: PCT/EP2012/060531
(87) Internationale Veröffentlichungsnummer: WO 2012/168203

(56) Entgegenhaltungen:
- EP-A1- 0 884 368
- EP-A2- 0 709 422

## Beschreibung

Die vorliegende Erfindung betrifft eine Zusammensetzung enthaltend einen Phosphonitrilhalogenidkatalysator sowie lineare Polydimethylsiloxane mit einem definierten MW-Bereich und definierter Kettenlänge zur Depolymerisation und Entfernung von Siliconrückständen. Die erfindungsgemäße Zusammensetzung ist zur Entfernung von vernetzten oder unvernetzten, gefüllten oder ungefüllten Siliconrückständen von empfindlichen Oberflächen und Substraten besonders geeignet. Der Siliconlöser kann in den vielfältigen Anwendungen flüssig, pastös oder gelförmig sein, je nach Einsatzbereich.

Im Stand der Technik sind für das Entfernen oder die Depolymerisation von vernetzten oder unvernetzten Siliconen diverse Methoden und Zusammensetzungen bekannt.
- Quellen und entfernen mit Hilfe eines organischen oder halogenierten organischen Lösungsmittels.
- Quellen und entfernen mit Hilfe eines Amins wie beispielsweise Diisopropylamin.
- Depolymerisation des Polydimethylsiloxans mit Hilfe von alkalischen Lösungen starker Basen wie Natriumhydroxid, Kaliumhydroxid wie beispielsweise in US 2,710,843 beschrieben.
- Depolymerisation mit Hilfe von kurzkettigen oder cyclischen Oligodiorganosiloxanen wie beispielsweise in DE 69122740 T2 beschrieben.
- Depolymerisation durch wässrige Lösungen starker Säuren wie beispielsweise Alkylbenzolsulfonsäuren, Schwefelsäure, Fluorwasserstoffsäure wie beispielsweise in JP 8250400 A. beschrieben.
- Depolymerisation mit Hilfe einer Zusammensetzung enthaltend Phosphonitrilhalogenidverbindungen und kurzkettige Oligodimethylsiloxane von bis zu 7-Si-Kettenglieder wie beispielsweise in EP 0 884 368 A1 beschrieben. Die gegenteilige Verwendung von cyclischen oder linearen Phosphonitrilhalogenidverbindungen als Polymerisations- oder Kondensationskatalysator zur Herstellung langkettiger Polydimethylsiloxane ist seit langem Stand der Technik ebenso wie die Verwendung des Katalysators zur Equilibrierung von Polydimethylsiloxanen wie in DE 196 07 264 A1 beschrieben.
- US 5,008,229 ist auf Lösungen von Phosphonitrilchloriden in einem organischen Lösungsmittel und den Gebrauch solcher Zusammensetzungen zum Beschleunigen der Kondensation und/oder Äquilibrierung von Hydroxy-Endgruppen aufweisenden Diorganosiloxanen gerichtet. Obwohl verbesserte Ergebnisse erzielt werden, wird ein organisches Losungsmittel, wie Ethylacetat, eingesetzt, um die Auflösung des Phosphonitrilchlorids zu erleichtern. DE 37 25 377 beseitigt den Einsatz eines organischen Lösungsmittels durch Verwenden eines Reaktionsproduktes eines Phosphor-Stickstoff-Chlorids und eines cyclischen Diorganosiloxans, wie Octamethylcyclotetrasiloxan, als Katalysator. Die Erfahrung hat jedoch gezeigt, dass Reaktionsprodukte von Phosphor-Stickstoff-Chlorid und Octamethylcyclotetrasiloxan häufig Viskositaten aufweisen, die mehrere Tausend mPa·s (centipoises) übersteigen, was die Materialien weniger geeignet als Katalysatoren für die Entfernung von Polydimethylsiloxanrückstenden macht.

Der Nachteil aller bisher verfügbaren Siliconlöser ist, dass sie Lösungsmittel enthalten oder korrosive Substanzen wie beispielsweise Säuren oder Lauge enthalten, die bei der Entfernung von Siliconen von beispielsweise diversen Kunststoffsubstraten, diese Substrate angreifen oder zu einem Quellen der Substrate führen. Bei anderen Oberflächen wie beispielsweise Metallen oder Halbleitern können die Oberflächen korrosiv beschädigt werden.

Aufgabe der vorliegenden Erfindung war es daher, eine Zusammensetzung zur Verfügung zu stellen, welche zur Entfernung vernetzter und unvernetzter Polysiloxanrückstände von diversen Substraten beziehungsweise zwischen Substraten geeignet ist, aber inert gegen die Substrate ist und diese auch in dünner Schicht nicht schädigt, korrodiert oder quillt. Bei vielen Anwendungen spielt vor allem die Quellung von dünnen Substraten eine entscheidende Rolle, wenn die siliconlösende Zusammensetzung in Prozessen eingesetzt wird, in denen sie mit anderen Kunststoffen in direkten Kontakt gebracht wird. Überraschenderweise wurde ein direkter Zusammenhang zwischen der Kettenlänge der verwendeten linearen Siloxane und der Quellung von Kunststoffen in dünner Schicht, besonders unterhalb einer Schichtdicke von 250 µm, gefunden.

Diese Aufgabe wurde überraschenderweise gelöst durch eine Zusammensetzung enthaltend
A) mindestens eine Phosphonitrilhalogenidverbindung und
B) mindestens ein lineares Polydimethylsiloxans, mit einer Kettenlänge von 10 bis 50 Si-Einheiten und einer Molmasse von 730 g/mol bis 5.000 g/mol.

Die erfindungsgemäßen Zusammensetzungen sind besonders gut geeignet, um Polysiloxanrückstände oder -Schichten auf oder zwischen Substraten zu entfernen.

Die erfindungsgemäße Zusammensetzung hat den Vorteil, dass sie selektiv auf Siliconpolymere bzw. Polydimethylsiloxangruppen wirkt. Andere Kunststoffe werden, bedingt durch den Mechanismus der Reaktion, nicht angegriffen. Beispiele für Kunststoffe, die inert gegenüber der erfindungsgemäßen Zusammensetzung sind, sind: Polyolefin, Polystyrol, Polyvinylchlorid, Polyethylen, Polypropylen, Polynitril, Acrylnitril-butadien-styrolcopolymere oder Polyacrylat.

Erfindungsgemäße Zusammensetzungen lösen lediglich beispielsweise additionsvernetzte, kondensationsvernetzte und peroxydisch vernetzte Siliconkautschuke (RTV-1, RTV-2, LSR und HTV). Die erfindungsgemäße Zusammensetzung wirkt auch bei Silikonkautschuken, die je nach Anwendungsgebiet weitere Komponenten enthalten wie Füllstoffe, beispielsweise hydrophile oder hydrophobe Kieselsäuren, gefällte Kieselsäuren, Aluminiumoxide, Titanoxide, Ruße, Graphite, Metalle, Metallcarbonate, Diatomeenerden, Metallstäube, Fasern wie Glasfasern oder Kunststofffasern und sonstige Additive wie Fungizide, Duftstoffe, Korrosionsinhibitoren, Oxidationsinhibitoren, Lichtschutzmittel, flammabweisend machende Mittel, Dispergierhilfsmittel, Haftvermittler, Pigmente, Weichmacher, organische Poylmere oder Hitzestabilisatoren sein. Auch Copolymere, die Polydiorganosiloxaneinheiten oder Siliconharze enthalten, werden durch die erfindungsgemäßen Zusammensetzungen abgebaut.

Bei vielen Anwendungen spielt die Vermeidung der Quellung von dünnen Substraten eine entscheidende Rolle, vor allem, wenn die siliconlösende Zusammensetzung in Prozessen eingesetzt wird, in denen sie mit anderen Kunststoffen in direkten Kontakt gebracht wird. Überraschenderweise wurde ein direkter Zusammenhang zwischen der Kettenlänge von B) und der Quellung von Kunststoffen in dünner Schicht gefunden, insbesondere, wenn die Schichtdicken unterhalb von 200 µm liegen, sind kurzkettige B) bis 9 Si-Einheiten zu vermeiden, da diese zu einer ungewünschten Quellung dieser Kunststoffe führen, und es somit zu Beschädigungen kommt und damit zur Produktion von Ausschussware.

Die Verwendung von B) mit 50 und mehr Si-Einheiten hat wiederum den Nachteil, dass die Silikonkautschuke sich aufgrund der langsameren Diffusion wesentlich langsamer lösen lassen.

In einer bevorzugten Ausführungsform entspricht die Komponente A) der allgemeinen Formel (1):

Hal₃P(NPHal)ₙNPHal₃ · PHal₆, (1)

worin
n 0-4 und vorzugsweise 1 oder 2
Hal entweder Cl, Br oder I
bedeutet.

Die Verbindungen A) sind seit langem im Stand der Technik bekannt und können beispielsweise hergestellt werden nach in der US-PS 3,839,388 beschriebenen Verfahren.

In einer bevorzugten Ausführungsform entspricht die Komponente B) der allgemeinen Formel (2):

R(R¹)₂Si[OSi(R¹)₂]ₘOSi(R¹)₂R, (2)

worin
R Wasserstoff oder eine einwertige organische C₁₋₁₈-Gruppe bedeutet,
R¹ gleich oder verschieden eine einwertige organische C₁₋₁₈-Gruppe und vorzugsweise Methyl, Vinyl, Phenyl oder Hydroxyl und
m eine ganze Zahl von 8 bis 65
bedeutet.

Zu den bevorzugten Ausführungsformen zu den Organogruppen für Reste R der Formel (2) gehören C₁₋₈-Alkylreste, z. B. Methyl, Ethyl, Propyl, Butyl und Halogenalkylreste, wie Trifluorpropyl. Zusätzlich kann R C₁₋₈-Alkenyl sein, wie Vinyl und Allyl;

C₃₋₈-Cycloalkyl, wie Cyclopropyl und Cycloalkenyl, wie Cyclopentyl. R schließt auch C₆₋₁₃-Arylreste ein, wie Phenyl, Tolyl, Xylyl und Naphthyl ebenso wie Halogenaryl, z. B. Chlorphenyl. Besonders bevorzugt ist der Rest R Methyl, Vinyl oder Phenyl. Reste R¹ der Formel (2) sind alle für den Rest R vorgenannten einwertigen organischen C₁₋₁₈- Reste.

Bevorzugt sind die Endgruppen der Komponente B) Trimethylsilyl- oder Dimethylvinylsilyl-Endgruppen.

Als weiteren optionalen Bestandteil können erfindungsgemäße Zusammensetzungen Verdickungsmittel C) enthalten um die Viskosität zu einzustellen und beispielsweise pastöse Massen herzustellen. Beispiele für Verdickungsmittel C) sind: gefällte Kieselsäure, hydrophile oder hydrophobe hochdisperse Kieselsäure, Aluminiumoxid, Titandioxid, Calziumsalze von Carbonsäuren, Ruße oder Carboxymethylcellulose. Es können alle nach dem Stand der Technik bekannten Verdickungsmittel verwendet werden, die einen Wassergehalt unterhalb von 5000 ppm aufweisen. Bevorzugt soll der Wassergehalt unterhalb von 2500 ppm liegen und besonders bevorzugt unterhalb von 1000 ppm. Auch organische aliphatische Alkoholgruppen sind in der Zusammensetzung zu vermeiden, da diese, analog zu Wasser, zur Hydrolyse der Komponente A) führen und die Zusammensetzung ihre Eigenschaft zur Äquilibrierung verlieren würde. Bevorzugt wird C) aus der Gruppe der pyrogenen Kieselsäuren ausgewählt.

Die Herstellung der erfindungsgemäßen Zusammensetzung erfolgt durch Mischen von A) mit B) und evtl. C) idealerweise bis zur Bildung einer klaren Lösung.

Bevorzugt kommen 0,1 - 3,0 Gewichtsteile A) auf 100 Gewichtsteile B). Beim Mischen kommt es kaum zu einer Viskositätszunahme der dynamischen Viskosität. Die erfindungsgemäße Zusammensetzung weist eine Viskosität im Bereich von etwa 5 - 1.000 mm²/s mPa s auf. Die Viskositätsangaben beziehen sich auf eine Temperatur von 20 °C und eine Scherrate von 0,9 s⁻¹.

Wird auch C) eingesetzt, so erfolgt dies um die Viskosität der erfindungsgemäßen Zusammensetzung auf einen definierten Bereich einzustellen. Dabei wird C) in Mengen von 0,5 - 30 Gewichtteile auf 100 Gewichtsteile B) verwendet. Bevorzugt werden 2 bis 25 Gewichtsteile und besonders bevorzugt 5 bis 20 Gewichtsteile zugegeben.

Das Mischen erfolgt üblicherweise durch intensives Rühren der Komponenten zwischen 0,5 und 10 Stunden bei Raumtemperatur oder erhöhter Temperatur (bis zu 140 °C). Das Mischen findet in einer bevorzugten Variante unter einer Inertgasatmosphäre statt (beispielsweise Stickstoff oder Argon). Nach Bildung einer klaren Lösung können flüchtige Bestandteile unter verringertem Druck entfernt werden.

Ein weiterer Gegenstand der vorliegenden Erfindung ist die Verwendung der erfindungsgemäßen Zusammensetzung zur Depolymerisation und Entfernung von vernetzten oder unvernetzten Siliconrückständen von Oberflächen oder Substraten.

Je nach Viskosität der erfindungsgemäßen Zusammensetzungen - flüssig, pastös oder gelförmig - erfolgt dies auf verschieden Weise, wie beispielsweise aufsprühen oder auftragen der erfindungsgemäßen Zusammensetzung auf den zu reinigenden Gegenstand/Oberfläche/Substrat oder auch durch eintauchen des zu reinigenden Gegenstandes in die erfindungsgemäße Zusammensetzung. Je nach Schichtdicke und Zusammensetzung der zu entfernenden Siliconrückstände kann die Einwirkzeit zwischen 10 s und mehreren Stunden betragen. In einer bevorzugten Ausführungsform beträgt die Einwirkzeit zwischen 30 s und 10 min. Eine Temperaturerhöhung während der Einwirkzeit beschleunigt den Auflösungsprozess. Temperaturen zwischen 20 °C und 150 °C können angewendet werden, wobei als bevorzugter Temperaturbereich 20 °C bis 100 °C angegeben werden kann.

Ebenfalls beschleunigend wirkt jegliche Umwälzung der erfindungsgemäßen Zusammensetzung, beispielsweise durch pumpen, schütteln oder durch die Einwirkung von Ultraschall. In einer bevorzugten Ausführungsform beträgt die Einwirkzeit bei Raumtemperatur unter Verwendung von Ultraschall zwischen 10 s und 5 min. In einer weiteren bevorzugten Ausführungsform beträgt die Einwirkzeit bei 80 °C - 120 °C unter der Verwendung von Ultraschall zwischen 10 s und 3 min.

Nach der Einwirkzeit werden die Produkte idealerweise zuerst mit einem kurzkettigen Polydimethylsiloxan abgewaschen, das anschließend mit einem Lösungsmittel wie z.B. Isopropanol, Ethylacetat, o.ä. entfernt wird. Hierdurch wird gewährleistet, dass sich keine korrosiven Spaltprodukte der verwendeten Verbindung A) bilden können.

Die Erfindung wird durch die folgenden Beispiele veranschaulicht, ohne dabei einschränkend zu wirken. Die angegebenen Teile beziehen sich, sofern nicht anders angegeben, auf das Gewicht. Die nachstehenden Beispiele werden bei einem Druck der umgebenden Atmosphäre, also etwa bei 1.000 hPa und, sofern nicht anders angegeben, bei Raumptemperatur, also etwa 20 °C, durchgeführt. Die Viskositätsangaben beziehen sich auf eine Temperatur von 25 °C. Bei Applikationsbeispielen zur Auflösung vernetzter Siliconelastomere kann die Angabe "Einwirkung von Ultraschall" durch Einbringen eines Glaskolbens in ein Ultraschallbad (Bandelin RM 40), durch das Einbringen eines Ultraschallsonde oder ähnlichem erfolgen.

### Beispiel 1: siliconlösende Zusammensetzung 1

Es werden 100 g trimethylsilyl-endständiges Polydimethylsiloxan mit einer Viskosität von 5 mPa·s und einer Mindestkettenlänge von 10 Si-Einheiten (mittlere Kettenlänge 15 Einheiten) mit 0,5 g Phosphonitrilchlorid gemischt und 2 Stunden bei Raumtemperatur gerührt. Eventuell nicht gelöstes Phosphonitrilchlorid wird durch abdekantieren der überstehenden aktiven Lösung entfernt. Weitere Verwendung findet danach die abdekantierte Lösung, nicht der Rückstand (ungelöstes Phosphonitrilchlorid).

### Beispiel 2: siliconlösende Zusammensetzung 2

Es werden 100 g trimethylsilyl-endständiges Polydimethylsiloxan mit einer Viskosität von 5 mPa·s und einer Mindestkettenlänge von 10 Si-Einheiten (mittlere Kettenlänge 15 Einheiten) mit 0,5 g Phosphonitrilchlorid gemischt und 1 Stunde bei 100 °C gerührt. Dabei entsteht eine klare Lösung, aus der eventuell nach dem Abkühlen wieder Phosphonitrilchlorid ausfallen kann, was wie in Beispiel 1 durch abdekantieren der Lösung entfernt wird. Weitere Verwendung findet danach die abdekantierte Lösung, nicht der Rückstand (ungelöstes Phosphonitrilchlorid).

### Beispiel 3: siliconlösende Zusammensetzung 3

Es werden 100 g trimethylsilyl-endständiges Polydimethylsiloxan mit einer Viskosität von 50 mPa·s und einer Mindestkettenlänge von 10 Si-Einheiten (mittlere Kettenlänge 40 Einheiten) mit 0,5 g Phosphonitrilchlorid gemischt und 2 Stunden bei Raumtemperatur gerührt. Eine mögliche Aufarbeitung der Lösung erfolgt wie in den vorstehenden Beispielen.

### Beispiel 4: siliconlösende Zusammensetzung 4 (nicht erfindungsgemäß)

Es werden 100 g dimethylvinylsilyl-endständiges Polydimethylsiloxan mit einer Viskosität von 100 mPa·s und einer Mindestkettenlänge von 10 Si-Einheiten (mittlere Kettenlänge 70 Einheiten) mit 0,5 g Phosphonitrilchlorid gemischt und 2 Stunden bei Raumtemperatur gerührt. Eine mögliche Aufarbeitung der Lösung erfolgt wie in den vorstehenden Beispielen.

### Beispiel 5: Auflösung einer Polydimethylsiloxan-Zusammensetzung

10 Quadratzentimeter einer 100 µm dünnen Schicht einer vernetzten Siliconzusammensetzung (ELASTOSIL^{®} LR 3003/40, der Firma Wacker Chemie AG, München) werden mit 50 ml Lösung aus Beispiel 1 überschichtet. Dabei wurde mit folgenden Applikationsbedingungen eine komplette Auflösung der Schicht erreicht:
a) Raumtemperatur: 30 min
b) Raumtemperatur unter Einwirkung von Ultraschall: 5 min
c) 80 °C: 10 min
d) 80 °C und unter Einwirkung von Ultraschall: 1 min

### Beispiel 6: Auflösung einer Polydimethylsiloxan-Zusammensetzung

10 Quadratzentimeter einer 200 µm dünnen Schicht einer vernetzten Siliconzusammensetzung (ELASTOSIL^{®} LR 3003/40, der Firma Wacker Chemie AG, München) werden mit 50 ml Lösung aus Beispiel 3 überschichtet. Dabei wurde mit folgenden Applikationsbedingungen eine komplette Auflösung der Schicht erreicht:
a) Raumtemperatur: 45 min
b) Raumtemperatur unter Einwirkung von Ultraschall: 7 min
c) 80 °C: 13 min
d) 80 °C und unter Einwirkung von Ultraschall: 3 min

### Beispiel 7: Auflösung einer Polydimethylsiloxan-Zusammensetzung (nicht erfindungsgemäß)

10 Quadratzentimeter einer 200 µm dünnen Schicht einer vernetzten Siliconzusammensetzung (ELASTOSIL^{®} LR 3003/40) werden mit 50 ml Lösung aus Beispiel 4 überschichtet. Dabei wurde eine komplette Auflösung der Schicht erst unter zeitlich wesentlich verlängerten Applikationsbedingungen erreicht:
a) Raumtemperatur: 60 min
b) Raumtemperatur unter Einwirkung von Ultraschall: 15 min
c) 80 °C: 20min
d) 80 °C und unter Einwirkung von Ultraschall: 8 min

Im Folgenden wird die Wechselwirkung insbesondere die Quellung von diversen Kunststoffen, die mit siliconlösenden Zusammensetzungen in Kontakt kommen untersucht. Die Einwirkzeit war jeweils 24 h bei einer Temperatur von 20 °C. In der nachstehenden Tabelle 1 werden die Ergebnisse durch die Messung Gewichtszunahmen in [%] von etwa 100 µm dicken Folien der angegeben Kunststoffe veranschaulicht. Es wurden 10 cm² kommerziell verfügbare Folien bzw. Ausgangsstoffe verwendet. Die Bestimmung der prozentualen Quellung erfolgte durch Differenzwägung der Folie mit Hilfe einer Analysenwaage. Die Quellung der Polymere hängt hauptsächlich von der Chemie der Kunststoffe ab (Löslichkeitsparameter), weshalb exemplarisch die Stoffgruppe genannt wird und nicht spezielle Formulierungen.
- NE1: Nicht erfindungsgemäße Zusammensetzung 1:
Hexamethyldisiloxan als Reinstoff
- NE2: Nicht erfindungsgemäße Zusammensetzung 2:
Mittlere Kettenlänge 5 Si-Einheiten (entspricht einem Gemisch aus kurzkettigen linearen und cyclischen Polydimethylsiloxanen)
- E: Erfindungsgemäße Zusammensetzung aus Beispiel 1.

**Tabelle 1:**

| Gewichtszunahmen in [%] | NE1 | NE2 | E |
|---|---|---|---|
| Acrylnitril/Butadien/Styrol | 5 | 2 | 0 |
| Epoxidharz | 3 | 1 | 0 |
| Ethylen-Polyvinylacetat | 1 | 0 | 0 |
| Melamin | 1 | 0 | 0 |
| Natürlicher Kautschuk | 5 | 2 | 0,5 |
| Polyamid | 3 | 0,5 | 0 |
| Polybutylenterephthalat | 2 | 1 | 0 |
| Polycarbonat | 4 | 2 | 0 |
| Polyetheretherketon | 3 | 1 | 0 |
| Polyetherimid | 5 | 3 | 0 |
| Polyethersulfon | 4 | 2 | 0 |
| Polyethylen (d>0,94) | 7 | 3 | 0 |
| Polyethylenterephthalat | 4 | 1 | 0 |
| Polyethylenterephthalat | 4 | 1 | 0 |
| Polyimide (Polybenzimidazol, Polybismaleinimid, Polyetherimid, Polyamidimid) | 6 | 2 | 0 |
| Polymethylmethacrylat | 4 | 2 | 0 |
| Polyoxymethylen | 5 | 1 | 0 |
| Polypropylen | 5 | 2 | 0,5 |
| Polystyrol | 5 | 2 | 0 |
| Polytetrafluorethylen | 6 | 4 | 1 |
| Polyurethan | 4 | 1 | 0 |
| Polyvinylchlorid | 7 | 3 | 0,5 |
| Styrol-Acrylnitril | 8 | 4 | 0,5 |
| Vinylchlorid-Vinylacetat-Copolymer | 3 | 1 | 0 |

Wie aus Tabelle 1 hervorgeht, wurde überraschenderweise gefunden, dass erfindungsgemäße Zusammensetzungen sich besonders gut eigenen um Silikonrückstände zu entfernen ohne jedoch einen negativen Einfluss (z.B. Quellung) auf die Oberflächen bzw. Substrate, von denen sie entfernt wurden, zu zeigen.

## Patentansprüche

1. Zusammensetzung zur Entfernung von vernetzten Polydimethylsiloxanen, enthaltend
A)mindestens eine Phosphonitrilhalogenidverbindung und
B)mindestens ein lineares Polydimethylsiloxans, mit einer Kettenlänge von 10 bis 50 Si-Einheiten und einer Molmasse von 730 g/mol bis 5.000 g/mol.

2. Zusammensetzung nach Anspruch 1, **dadurch gekennzeichnet, dass** 0,1 - 3,0 Gewichtsteile A) auf 100 Gewichtsteile B) verwendet werden.

3. Zusammensetzung nach Anspruch 1 oder 2, **dadurch gekennzeichnet, dass** A) Phosphornitrilchlorid ist.

4. Verfahren zur Herstellung der Zusammensetzung nach einem der Ansprüche 1 bis 3, durch intensives vermischen der Komponenten A) und B).

5. Verwendung der der erfindungsgemäßen Zusammensetzung nach einem der Ansprüche 1 bis 3, zur Depolymerisation und Entfernung von vernetzten oder unvernetzten Siliconrückständen von Oberflächen oder Substraten.

## Claims

1. Composition for removal of crosslinked polydimethylsiloxanes, containing
A) at least one phosphonitrile halide compound, and
B) at least one linear polydimethylsiloxane having a chain length of 10 to 50 Si units and a molar mass of 730 g/mol to 5000 g/mol.

2. Composition according to Claim 1, **characterized in that** 0.1-3.0 parts by weight of A) are used per 100 parts by weight of B).

3. Composition according to Claim 1 or 2, **characterized in that** A) is phosphonitrile chloride.

4. Process for preparing the composition according to any one of Claims 1 to 3, by intensive mixing of components A) and B).

5. Use of the invention composition according to any one of Claims 1 to 3 for depolymerization and removal of crosslinked or uncrosslinked silicone residues from surfaces or substrates.

## Revendications

1. Composition pour l'élimination de polydiméthylsiloxanes réticulés, contenant :
A) au moins un composé d'halogénure de phosphonitrile et
B) au moins un polydiméthylsiloxane linéaire, d'une longueur de chaîne de 10 à 50 unités Si et d'une masse molaire de 730 g/mol à 5 000 g/mol.

2. Composition selon la revendication 1, **caractérisée en ce que** 0,1 à 3,0 parties en poids de A) pour 100 parties en poids de B) sont utilisées.

3. Composition selon la revendication 1 ou 2, **caractérisée en ce que** A) est le chlorure de phosphonitrile.

4. Procédé de fabrication de la composition selon l'une quelconque des revendications 1 à 3, par mélange intensif des composants A) et B).

5. Utilisation de la composition selon l'invention selon l'une quelconque des revendications 1 à 3, pour la dépolymérisation et l'élimination de résidus de silicone réticulés ou non réticulés de surfaces ou de substrats.
